# EUROPÄISCHE PATENTSCHRIFT

(11) **EP 1 396 658 B1**
(45) Veröffentlichungstag und Bekanntmachung des Hinweises auf die Patenterteilung: **12.07.2006**
(21) Anmeldenummer: 02020121.6
(22) Anmeldetag: 07.09.2002
(51) Int. Cl.: F16G 5/20

(54) **Keilrippenriemen und Verfahren zu dessen Herstellung**
V-ribbed belt and method for fabricating the same
Courroie à nervures en V et sa méthode de fabrication

(43) Veröffentlichungstag der Anmeldung: 10.03.2004
(73) Patentinhaber: ContiTech Antriebssysteme GmbH, 30165 Hannover (DE)
(72) Erfinder: Nonnast, Tobias, 30457 Hannover (DE); Zimmermann, Kay, 30826 Garbsen (DE); Greydanus, Ymte, 30890 Barsinghausen (DE)
(74) Vertreter: Finger, Karsten

(56) Entgegenhaltungen:
- EP-A- 0 176 686
- EP-A- 0 662 571
- EP-A- 1 108 750
- DE-A- 10 016 351
- DE-C- 4 318 454
- US-B1- 6 352 488

## Beschreibung

Die Erfindung betrifft Keilrippenriemen mit einer elastomeren Decklage, einer Zugträgerlage und einem elastomeren Grundkörper, der Rippen aufweist, wobei die Rippen eine mit dem Grundkörper fest verbundene, Polymer und Fasern enthaltende äußere Beschichtung aufweisen. Ferner betrifft die Erfindung ein Verfahren zur Herstellung eines solchen Keilrippenriemens.

Keilrippenriemen dienen z. B. zur Kraftübertragung in Einsatzbereichen von Büromaschinen bis hin zu schwersten Maschinenbauantrieben. Auch in Kraftfahrzeugen werden Keilrippenriemen in unterschiedlichen Ausführungen eingesetzt. Bei ihrem Einsatz werden die Keilrippenriemen unterschiedlichsten Betriebsbedingungen unterworfen, dabei werden hohe Anforderungen hinsichtlich Verschleißfestigkeit, Geräusch und dynamischer Belastbarkeit gestellt. Die Riemen sollen eine möglichst hohe Lebensdauer aufweisen und gleichzeitig sollen die Laufgeräusche vor allem in Kraftfahrzeug- und Hausgüterindustriebereich vermindert werden. Geräusche entstehen bei reibschlüssigen Treibriemen, wie Keilrippenriemen es sind, durch Reibverhältnisse zwischen Antriebsscheiben und Riemenoberfläche, die quietschende Töne durch Oszillation oder Vibration hervorrufen.

Um die Geräuschentwicklung bei reibschlüssigen Treibriemen zu vermindern und gleichzeitig die Verschleißfestigkeit zu verbessern, wird in der DE 100 16 351 A1 ein Riemen beschrieben, der an Teilen seiner Oberfläche, z. B. beim Keilrippenriemen an der Rippenoberfläche, eine Polymer enthaltende, äußere Beschichtung aufweist, die durch einen Vulkanisationsprozess mit dem Gummi oder gummiähnlichen Kunststoff des Grundkörper verbunden und/oder vernetzt ist. Weiterhin weist der Riemen an seiner Oberfläche ein Beflockungsmaterial aus Aramidfasern auf, von denen ein Teil in diese Beschichtung nur mit einer Teillänge eingebunden ist. Die Polymer enthaltende äußere Beschichtung, die als Lösung oder in flüssiger Form aufgebracht wird, wirkt bei dem Beflockungsvorgang als Klebstoff für die Fasern. Bei der Beschichtung kann es sich z. B. um Kautschuklösungen, Urethansysteme oder System auf Basis von Cyanacrylat in organischem Lösungsmittel handeln. Die äußere Beschichtung kann zusätzlich Fluorpolymere enthalten. Keilrippenriemen mit einer derartigen Beschichtung werden mit Hilfe eines zeit- und personalintensiven Beflockungsverfahrens hergestellt. Zunächst muss die Polymer enthaltende äußere Beschichtung durch Sprühen, Streichen oder Tauchen auf den Wickelrohling aufgebracht werden. Eine derartige Beschichtung weist in der Regel eine Schichtdicke von nur 50 µm auf. Dann erfolgt die Beflockung, bei der es häufig zu hohem Flockmaterialverlust durch nicht anhaftendes Material kommt. Im Anschluss muss der Wickelrohling bei Verwendung von lösungsmittelhaltigen Beschichtungslösungen vor der Vulkanisation noch über längere Zeiträume zur Entfernung des Lösungsmittels abgelüftet werden, da Lösungsmittelreste bei der Vulkanisation zu Hohlräumen und Inhomogenitäten im Produkt führen können. Aber auch nach dem Ablüften und der Vulkanisation können gewisse Mengen an Lösungsmittel im Produkt verblieben sein, die im Lauf des Produktlebens abdampfen. Auch durch diese spätere Verdampfung von Restlösungsmittel kann es bei den Produkten zu Eigenschaftseinbußen kommen. So verringert sich z. B. das Volumen des Gummikörpers nach vollständiger Verdunstung des Lösungsmittels und die Formstabilität und die physikalischen Eigenschaften verändern sich dadurch im Nachhinein noch, was besonders für hochbelastete Gummiprodukte berücksichtigt werden muss. Hinzu kann eine Geruchsbelästigung durch die entweichenden Lösungsmittelreste kommen. Man berücksichtigt die vorgenannten Aspekte, indem man die Gummiprodukte vor einer Prüfung und vor dem Einsatz einige Zeit ablagern lässt. Dadurch hält man sehr große Lagerbestände vor, die aus betriebswirtschaftlicher Sicht bekanntlich nicht erwünscht sind. Sind die Beflockungsfasern im Verlauf des Riemengebrauchs abgerieben, bietet die sehr dünne Polymer enthaltende Schicht (ca. 50 µm) kaum noch Schutz gegen Verschleiß.

Aus der DE 43 18 454 C1 sind Gummizahnriemen aus elastomerem Werkstoff bekannt, die bei hoher Abriebfestigkeit und Lebensdauer mit geringem technischem Aufwand hergestellt werden können. Um dies zu erreichen, weisen die Außenflächen der Zähne eine Beschichtung auf, die aus einem faserverstärkten polymeren Werkstoff, z. B. einem Elastomer mit 10 bis 80 % Faserkonzentration pro Polymeranteil, besteht, dessen Faserkonzentration höher ist als im übrigen elastomeren Grundkörper. Über die Dicke der Beschichtung wird in der DE 43 18 454 C1 nichts ausgesagt. Eine derartige Beschichtung liefert bei Keilrippenriemen hinsichtlich des Geräuschverhaltens oftmals noch nicht die gewünschten Ergebnisse.

In der EP 0 176 686 B 1 sind Keilriemen mit hoher transversaler Steifigkeit und longitudinaler Flexibilität beschrieben, deren Riemenkörper vollständig aus einzelnen elastomeren Lagen aufgebaut ist, in denen jeweils in einer Richtung orientierte Fasern angeordnet sind. Die Dicke jeder Lage ist dabei geringer oder gleich der durchschnittlichen Länge der in der Lage vorhandenen Fasern. Die Faserkonzentration in den Lagen kann nicht sehr hoch gewählt werden, da sich die elastischen Eigenschaften des Riemenkörpers verschlechtern würden. Die Abriebfestigkeit und das Geräuschverhalten solcher Riemen ist für viele Einsatzbereiche nicht ausreichend.

Der Erfindung liegt die Aufgabe zu Grunde, einen Keilrippenriemen bereitzustellen, der sich einfach und wirtschaftlich herstellen lässt und der eine gute oder verbesserte Abriebbeständigkeit und ein gutes oder verbessertes Geräuschverhalten bei gleichzeitig guter dynamischer Belastbarkeit aufweist. Ferner liegt der Erfindung die Aufgabe zu Grunde ein Verfahren zur einfachen und wirtschaftlichen Herstellung eines solchen Keilrippenriemens bereitzustellen.

Gelöst wird die Aufgabe gemäß dem Anspruch 1 durch einen Keilrippenriemen der eingangs genannten Art, bei dem die äußere Beschichtung eine zumindest Fasern in Kombination mit Fluorpolymerpulver und/oder Pulver aus einem Nichteisenmetall enthaltende, auf vernetztem Kautschuk basierende Elastomerschicht mit einer Schichtdicke von 0,15 bis 0,25 mm ist. Die äußere Beschichtung kann demnach Fluorpolymerpulver oder Pulver aus einem Nichteisenmetall oder beides enthalten.

Ferner wird die Aufgabe gelöst durch ein Verfahren gemäß dem Anspruch 12, das zumindest folgende Schritte aufweist:
a) Herstellung einer vulkanisierbaren Kautschukmischung für die äußere Beschichtung der Rippen des Keilrippenriemens, die zumindest einen Kautschuk, Vulkanisationschemikalien, Fasern und zumindest ein Pulver ausgewählt aus Fluorpolymerpulver und Pulver aus einem Nichteisenmetall enthält,
b) Kalandrieren der Kautschukmischung für die äußere Beschichtung zu einer Bahn mit einer Schichtdicke von 0,15 bis 0,25 mm,
c) Aufbringen der Bahn auf die im fertigen Riemen die Rippen bildende Seite einer Kautschukmischungsplatte für den Grundkörper oder einen Riemenwickelrohling, der bereits zumindest die Kautschukmischungsplatte für die Decklage, die Zugträgerlage und die Kautschukmischungsplatte für den Grundkörper aufweist,
d) Vulkanisation des Riemenwickelrohlings und
e) Schneiden des Keilrippenriemens.

Ein derartiger Keilrippenriemen lässt sich einfach und wirtschaftlich herstellen, indem eine Kautschukmischung mit Fasern in Kombination mit Fluorpolymerpulver und/oder einem Pulver aus einem Nichteisenmetall auf den Wickelrohling aufgebracht wird und diese Schicht bei der Vulkanisation des Wickelrohlings zum Elastomer vernetzt wird, dabei wird einer gute Verbindung zwischen Grundkörper und äußerer Beschichtung gewährleistet. Aufwendige Vorbehandlungschritte, wie z. B. ein Versehen des Rohlings mit Klebelösung, und eine Beflockung mit großen Mengen an hochwertigem Abfall finden nicht statt. Lösungsmittel werden nicht verwendet und Ablüftzeit wird nicht benötigt. Die Kautschukmischungsbahnen für die äußere Beschichtung können auch zentral hergestellt und in gerollten Ballen transportiert und gelagert werden.

In der Elastomerschicht müssen sowohl Fasern als auch Fluorpolymerpulver und/oder Pulver aus einem Nichteisenmetall enthalten sein, denn erst so lässt sich überraschenderweise eine deutliche Verbesserung in den Eigenschaften Geräusch und/oder Abrieb erzielen.

Gleichzeitig muss die Schichtdicke der Elastomerschicht zwischen 0,15 und 0,25 mm liegen, um Riemen mit hoher Flexibilität im Betrieb und einer hohen Lebensdauer zu erhalten. Bei Schichtdicken von mehr als 0,25 mm kann es bei der Ausformung des Rippenprofils durch die fasergefüllte Mischung zu Beeinträchtingungen kommen, da die Fließfähigkeit der fasergefüllten Mischung eingeschränkt ist. Es kann dann zu runden Rippenköpfen, zu flachen Rippen, Anrissen in der Elastomerschicht oder unbeschichteten Fehlstellen kommen. Ist die Schichtdicke kleiner als 0,15 mm, wird die Verarbeitungsfähigkeit beeinträchtigt, es kann leicht zu Beschädigungen der Kautschukbahn beim Ablängen und Auflegen auf den Wickelrohling kommen.

Die Schichtdicke beträgt bevorzugt 0,18 bis 0,22 mm. Eine Schicht dieser Dicke gewährleistet über die gesamte Lebensdauer des Keilrippenriemens eine ausreichende Fasermenge an der Rippenoberfläche. Fasern, die während des Einsatzes des Riemens aus der Schicht durch die auftretenden Reibungskräfte herausgelöst werden, können durch darunterliegende Fasern ersetzt werden.

Gemäß einer vorteilhaften Weiterbildung der Erfindung beträgt der Faseranteil in der äußeren Beschichtung 20 bis 100 Gewichtsteile pro 100 Gewichtsteile Kautschuk, besonders bevorzugt beträgt der Faseranteil 40 bis 85 Gewichtsteile. Mit derartigen Faseranteilen kann man die besten Ergebnisse hinsichtlich der Lebensdauer erzielen. Bei größeren Faseranteilen wird die Kautschukmischung spröde und trocken, dies führt zu einer schlechteren Anbindung der äußeren Beschichtung an den Grundkörper oder gar dazu, dass die Mischung nicht zu einer geschlossenen Kautschukbahn kalandriert werden kann. Bei niedrigeren Faseranteilen sind Abriebeigenschaften und Geräuschverhalten des Riemens nicht hinreichend.

Als Fasern für die äußere Beschichtung können verschiedenste dem Fachmann bekannte Fasern aus unterschiedlichsten Materialien und mit unterschiedlichen Längen und Faserdurchmessern verwendet werden, dabei kann es sich z. B. um Fasern aus Aramiden (z. B. Para-Aramide und Meta-Aramide), Polyacrylnitril, Polyester oder Fasern auf Basis von Melaminharz handeln. Besonders bevorzugt sind allerdings Fasern aus Polyimid.

Fasern aus Polyimid haben eine inerte und glatte Oberfläche und ermöglichen dadurch eine Optimierung des Reibbeiwertes, was dazu beiträgt, dass beim Starten der Bewegung des Riemens, z. B. beim Starten des Motors, zunächst ein leichtes Rutschen auf den Antriebsscheibe zugelassen wird, so dass Geräusche unterbunden werden Können. Ferner sorgt die glatte Oberfläche für gute Verarbeitbarkeit der Mischung auch bei hohen Faseranteilen. Polyimidfasern werden bevorzugt in Mengen von 50 bis 85 Gewichtsteilen pro 100 Gewichtsteile Kautschuk eingesetzt. Polyimidfasern sind mit einer großer spezifischer Oberfläche erhältlich, die zu einer besonders festen Verankerung der Fasern in der Polymerschicht bewirkt.
Die äußere Beschichtung kann selbstverständlich auch mehrere verschiedene Fasersorten enthalten.

Die Fasern können eine Länge von 0,1 bis 6 mm aufweisen. Bei synthetischen Fasern können die Durchmesser der Fasern 4 bis 100 µm, bei Naturfasern 6 bis 50 µm betragen. Es können sowohl gemahlene (Mahlflock) als auch geschnittene Fasern (Schnittflock) eingesetzt werden. Auch der Einsatz von Pulpe oder Fasergranulat ist möglich.

Ist in der äußeren Beschichtung ein Fluorpolymerpulver vorhanden, so beträgt der bevorzugte Anteil des Fluorpolymerpulvers in der äußeren Beschichtung 10 bis 100 Gewichtsteile pro 100 Gewichtsteile Kautschuk. Mit diesen Anteilen können besonders gute Ergebnisse im Hinblick auf Abrieb- und Geräuschverhalten erzielt werden. Besonders bevorzugt werden mehr als 50 Gewichtsteile des Fluorpolymerpulvers pro 100 Gewichtsteile Kautschuk eingesetzt, wobei überraschenderweise festgestellt wurde, dass - trotz der üblicherweise schlechten Anbindung von Fluorpolymeren an Kautschuk und des hohen Anteils an Fluorpolymerpulver - vermutlich durch ein Zusammenspiel mit den Fasern in der erfindungsgemäßen äußeren Beschichtung kein merklicher Verlust von Fluorpolymerpulver in der Beschichtung während des Betriebes zu verzeichnen ist.

Gemäß einer vorteilhaften Weiterbildung der Erfindung weisen die Partikel des Fluorpolymerpulvers einen mittleren Korndurchmesser von 2 bis 20 µm, eine BET-Oberfläche von 5 bis 25 m²/g und ein Schüttgewicht von 100 bis 400 g/L auf. Mit Partikeln mit diesen Charakteristika erhält man Mischungen, die sich gut verarbeiten lassen und die am Keilrippenriemen zu guten Eigenschaften führen. Eine große BET-Oberfläche verbessert die Verankerung in der Elastomermatrix.

Gemäß einer bevorzugten Ausführungsform wird ein Pulver aus Polytetrafluorethylen (PTFE) als Fluorpolymerpulver eingesetzt, z. B. ein PTFE-Mikropulver mit einem mittleren Korndurchmesser von 4 µm, einer BET-Oberfläche von 17 m²/g und einem Schüttgewicht von 280 g/L. Es können aber z. B. auch Copolymere oder Terpolymere wie zum Beispiel Ethylen-Tetrafluorethylen-Copolymeren oder Tetrafluorethylen-Hexafluorpropylen-Vinylidenfluorid-Terpolymeren verwendet werden. Solche Polymere sind z. B. unter dem Handelsnamen Dyneon THV® der Firma Dyneon GmbH erhältlich. Auch Kombinationen aus verschiedenen Fluorpolymerpulvern können eingesetzt werden.

Ist in der äußeren Beschichtung ein Pulver aus einem Nichteisenmetall enthalten, so beträgt sein Anteil in der äußeren Beschichtung bevorzugt 50 bis 100 Gewichtsteile pro 100 Gewichtsteile Kautschuk. Mit diesen Anteilen an Pulver aus einem Nichteisenmetall kann eine besonders gute Geräuschreduzierung erzielt werden.

Die äußere Beschichtung kann Fluorpolymerpulver oder Pulver aus einem Nichteisenmetall oder beides enthalten. Sind beide enthalten, können synergistische Effekte hinsichtlich Geräusch- und Abriebverhalten auftreten.

Die Partikel des Pulvers aus einem Nichteisenmetall können kugel-, plättchen- oder sternförmig sein und einen mittleren Partikeldurchmesser von 10 bis 80 µm aufweisen. Derartige Partikel lassen sich gut in die Kautschukmischung für die äußere Beschichtung einmischen und werden im Betrieb nicht so leicht abgerieben.

Nichteisenmetall ist die Sammelbezeichnung für unlegierte Metalle mit Ausnahme des Eisens und für Legierungen, in denen ein Metall außer Eisen den größten Massenanteil aufweist. Pulver aus diesen Nichteisenmetallen können verwendet werden. Bevorzugt wird allerdings Kupferpulver eingesetzt. Es hat sich gezeigt, dass mit Kupferpulver ein besonders gutes Geräuschverhalten erzielt werden kann. So kann beispielsweise ein Kupferpulver mit eine Korndurchmesser < 63 µm verwendet werden.

Gemäß einer bevorzugten Ausführungsform der Erfindung basiert die äußere Beschichtung auf demselben Kautschuktyp oder denselben Kautschuktypen wie der elastomere Grundkörper. Auf diese Weise kann eine optimale Anbindung der äußeren Beschichtung an dem Grundkörper erreicht werden. Die äußere Beschichtung und der Grundkörper können beispielsweise auf Chloroprenkautschuk (CR), Ethylen-Propylen-Dienkautschuk (EPDM), hydriertem Nitrilkautschuk (HNBR) oder Gemischen daraus basieren.

Es ist möglich, dass die äußere Beschichtung sich farblich vom Grundkörper unterscheidet. Diese Ausführungsform bietet den Vorteil, dass die äußere Beschichtung als Verschleißindikator dienen kann. Wenn durch die äußere Beschichtung der anders farbige Grundkörper sichtbar wird, ist der Riemen zu wechseln. Zur Erzeugung der anders farbigen äußeren Beschichtung kann z. B. der Kautschukmischung für die äußere Beschichtung ein farbiges Pigment oder ein heller Füllstoff zugemischt werden, wenn der Grundkörper beispielsweise auf einer rußgefüllten schwarzen Mischung basiert.

Bei dem Verfahren zur Herstellung des Keilrippenriemens hat es sich gemäß Anspruch 13 als vorteilhaft erwiesen, dass die vulkanisierbare Kautschukmischung für die äußere Beschichtung der Rippen des Keilrippenriemens ein Verarbeitungshilfsmittel zur Erhöhung der Rohfestigkeit und/oder zur Einstellung eines gewünschten Thixotropiegrades der Mischung enthält. Der Faseranteil in der Mischung lässt sich so erhöhen, ohne dass die Mischung für die Verarbeitung zu spröde und trocken wird. Als Verarbeitungshilfsmittel kann z. B. eine Mikrofaser oder ein mischungsverträgliches Thixotropiermittel verwendet werden, die bzw. das die Rohfestigkeit deutlich erhöht und dadurch den Ausformprozess einer dünnen Bahn erleichtert und die beim Vulkanisationsvorgang schmilzt und in die Kautschukmatrix integriert wird.

Bei dem Verfahren zur Herstellung des Keilrippenriemens ist es von Vorteil, wenn die Bahn für die äußere Beschichtung durch einen Andrückvorgang an der Kautschukmischungsplatte für den Grundkörper oder dem Riemenwickelrohling fixiert wird. Fehler im Produkt können dadurch vermieden werden. Die Fixierung kann z. B. über eine weiche Rolle erfolgen, wobei die Fixierung durch die Andruckkraft und die Druckverweilzeit gesteuert werden kann.

Zumindest ein Teil der an der Oberfläche liegenden Fasern in der äußeren Beschichtung auf den Rippen kann nach der Vulkanisation durch einen Bürstvorgang aufgerichtet werden. Nach der Vulkanisation ist die ausgeformte Rippenoberfläche glatt und Fasern stehen kaum hervor. Durch den Bürstvorgang werden Faserenden freigelegt, die Geräusch und Abrieb positiv beeinflussen. Die Oberfläche wird quasi aktiviert. Der gleiche Effekt kann allerdings auch erzielt werden, wenn der Riemen einige Zeit im Antriebsaggregat über verschiedene Rollen gelaufen ist.

Im Folgenden wird die Erfindung anhand eines Ausführungsbeispiels im Zusammenhang mit den nachstehenden Figuren näher erläutert, ohne jedoch auf dieses Beispiel beschränkt zu sein.

Fig. 1 zeigt schematisch den Querschnitt eines erfindungsgemäßen Keilrippenriemens.

Fig. 2 zeigt schematisch den Querschnitt eines erfindungsgemäßen Keilrippenriemens nach der Aufrichtung der Fasern durch einen Bürstvorgang.

Fig. 3 zeigt schematisch das Aufbringen der Bahn für die äußere Beschichtung auf einen Riemenwickelrohling.

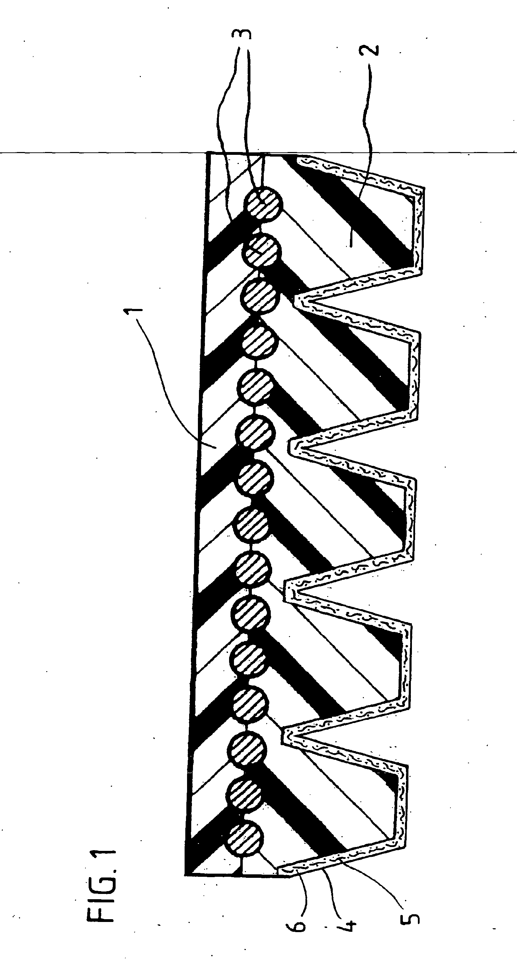

In der Figur 1 ist ein erfindungsgemäßer Keilrippenriemen dargestellt, der eine elastomere Decklage 1, einen elastomeren Grundkörper 2 und dazwischen eine Zugträgerlage 3 aufweist. Auf den Rippen des Keilrippenriemens befindet sich eine äußere Beschichtung 4, die Fasern 5 in Kombination mit Fluorpolymerpulver 6 enthält.

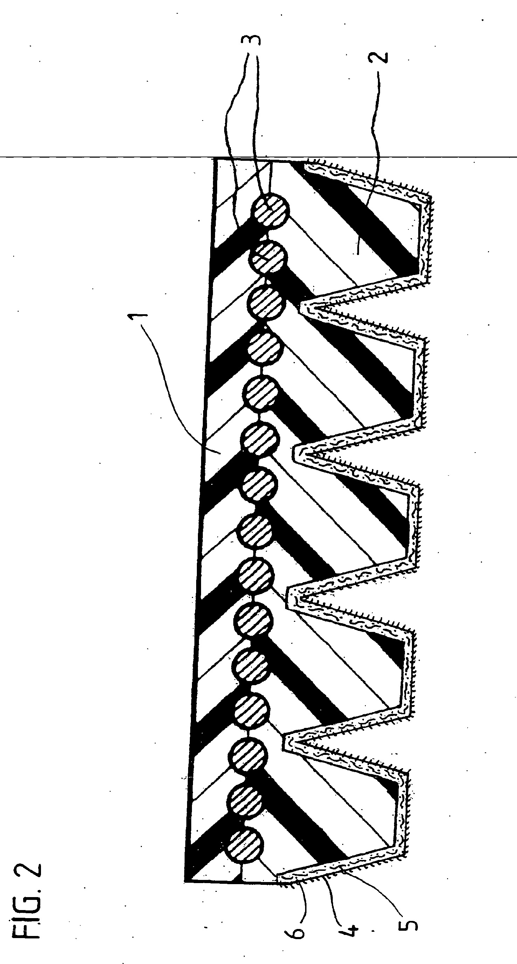

In der Figur 2 ist der gleiche Keilrippenriemen 1 nach einem Bürstvorgang dargestellt bei dem ein Teil der an der Oberfläche liegenden Fasern 5 in der äußeren Beschichtung 4 auf den Rippen aufgerichtet sind.

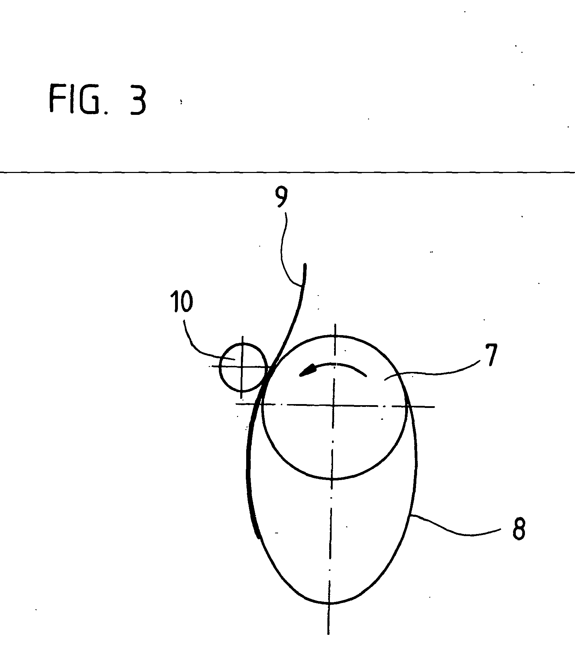

In Figur 3 ist dargestellt, wie auf einen von einer Trommel 7 gedrehten Riemenwickelrohling 8, der bereits die Kautschuksmischungsplatten für die Decklage und den Grundkörper sowie die Zugträgerlage enthält, eine Bahn 9 aus einer kalandrierten Kautschukmischung für die äußere Beschichtung mit einer Schichtdicke von 0,15 bis 0,25 mm aufgebracht wird. Eine Andruckrolle 10 fixiert die Bahn 9 auf dem Riemenwickelrohling 8.

Für die äußere Beschichtung kann z. B. eine Elastomerschicht aus folgender Mischung verwendet werden:

| | |
|---|---|
| 100 Gew.-teile | EPDM |
| 90 Gew.-teile | Aramid- und/oder Polyimidfasern |
| 50 Gew.-teile | PTFE-Pulver |
| 10 Gew.-teile | Aktivatoren |
| 15 Gew.-teile | Füllstoffe |
| 7 Gew.-teile | Vernetzer |
| 10 Gew.-teile | Acrylat |
| 10 Gew.-teile | Haftvermittler |
| 1 Gew.-teil | Weichmacher |
| 5 Gew.-teile | Stearinsäure |
| 10 Gew.-teile | Verarbeitungshilfsmittel |

Die Mischung wird in herkömmlichen Mischapparaturen gemischt und im Anschluss daran zu einer Bahn mit einer Schichtdicke von ca. 0.2 mm kalandriert und dann z. B. mit Hilfe der in Fig. 3 dargestellten Vorrichtung auf den Riemenwickelrohling aufgebracht. Anschließend wird vulkanisiert und der Wickel in Keilrippenriemen der gewünschten Breite geschnitten.

In der Tabelle 1 sind die Ergebnisse von Geräusch- und Abriebversuchen in Prüfvorrichtungen mit Keilrippenriemen dargestellt. Die Riemen unterscheiden sich nur in den Zuschlagstoffen für die Zusammensetzung der Elastomerschicht, die die äußere Beschichtung auf den Riemenrippen bildet. Bewertung: befriedigend o, gut +, sehr gut ++

**Tabelle 1**

| **Zuschlagstoffe** | **Geräusch** | **Abrieb** |
|---|---|---|
| Aramidflock | + | o |
| Polyimidfasern | + | + |
| PTFE-Pulver | + | + |
| Kupferpulver | + | + |
| Aramidflock und PTFE-Pulver | + | ++ |
| Polyimidfasern und PTFE-Pulver | ++ | ++ |
| Polyimidfasern und Kupferpulver | ++ | + |
| Polyimidfasern und PTFE-Pulver und Kupferpulver | ++ | ++ |

Zum Vergleich wurden auch Geräusch- und Abriebversuche mit einem Riemen durchgeführt, auf den gemäß DE 100 16 351 A1 ein Polyurethansystem in Form einer Lösung aufgebracht wurde und welcher anschließend mit Aramidfasem beflockt wurde.

**Tabelle 2**

| **Beflockter Riemen** | **Geräusch** | **Abrieb** |
|---|---|---|
| Polyurethanbeschichtung und Aramidflock | + | o |

Aus der Tabelle 1 wird ersichtlich, dass durch die Anwesenheit von Fasern in Kombination mit PTFE-Pulver und/oder mit Kupferpulver das Geräuschverhalten und/oder das Abriebverhalten im Vergleich zu Riemen, die in der äußeren Beschichtung nur Faser oder nur PTFE-Pulver oder nur Kupferpulver aufweisen, verbessert werden kann. Ein Vergleich mit dem Riemen mit der Polyurethanbeschichtung und den anschließend aufgeflockten Fasern zeigt, dass die erfindungsgemäßen Riemen im Geräusch- und Abriebverhalten gegenüber diesen Riemen verbessert sind.

### Bezugszeichenliste (ist Teil der Beschreibung)

- 1: Decklage
- 2: Grundkörper
- 3: Zugträgerlage
- 4: äußere Beschichtung
- 5: Fasern
- 6: Fluorpolymerpulver
- 7: Trommel
- 8: Riemenwickelrohling
- 9: Bahn aus kalandrierter Kautschukmischung
- 10: Andruckrolle

## Patentansprüche

1. Keilrippenriemen mit einer elastomeren Decklage (1), einer Zugträgerlage (3) und einem elastomeren Grundkörper , der Rippen aufweist, wobei die Rippen eine mit dem Grundkörper fest verbundene, Polymer und Fasern enthaltende äußere Beschichtung (4) aufweisen,
**dadurch gekennzeichnet, dass**
die äußere Beschichtung (4) eine zumindest Fasern (5) in Kombination mit Fluorpolymerpulver (6) und/oder Pulver aus einem Nichteisenmetall enthaltende, auf vernetztem Kautschuk basierende Elastomerschicht mit einer Schichtdicke von 0,15 bis 0,25 mm ist.

2. Keilrippenriemen nach Anspruch 1, **dadurch gekennzeichnet, dass** die Schichtdicke 0,18 bis 0,22 mm beträgt.

3. Keilrippenriemen nach einem der Ansprüche 1 oder 2, **dadurch gekennzeichnet, dass** der Faseranteil in der äußeren Beschichtung (4) 20 bis 100 Gewichtsteile pro 100 Gewichtsteile Kautschuk beträgt.

4. Keilrippenriemen nach zumindest einem der Ansprüche 1 bis 3, **dadurch gekennzeichnet, dass** die Fasern (5) Polyimidfasern sind.

5. Keilrippenriemen nach zumindest einem der Ansprüche 1 bis 4, **dadurch gekennzeichnet, dass** der Anteil an Fluorpolymerpulver (6) in der äußeren Beschichtung (4) 10 bis 100 Gewichtsteile, vorzugsweise mehr als 50 Gewichtsteile, pro 100 Gewichtsteile Kautschuk beträgt.

6. Keilrippenriemen nach zumindest einem der Ansprüche 1 bis 5, **dadurch gekennzeichnet, dass** die Partikel des Fluorpolymerpulvers (6) einen mittleren Korndurchmesser von 2 bis 20 µm, eine BET-Oberfläche von 5 bis 25 m²/g und ein Schüttgewicht von 100 bis 400 g/L aufweisen.

7. Keilrippenriemen nach zumindest einem der Ansprüche 1 bis 6, **dadurch gekennzeichnet, dass** der Anteil an Pulver aus einem Nichteisenmetall in der äußeren (4) Beschichtung 50 bis 100 Gewichtsteile pro 100 Gewichtsteile Kautschuk beträgt.

8. Keilrippenriemen nach zumindest einem der Ansprüche 1 bis 7, **dadurch gekennzeichnet, dass** das die Partikel des Pulvers aus einem Nichteisenmetall kugel-, plättchen- oder sternförmig sind und einen mittleren Partikeldurchmesser von 10 bis 80 µm aufweisen.

9. Keilrippenriemen nach zumindest einem der Ansprüche 1 bis 8, **dadurch gekennzeichnet, dass** das Pulver aus einem Nichteisenmetall ein Kupferpulver ist.

10. Keilrippenriemen nach zumindest einem der Ansprüche 1 bis 9, **dadurch gekennzeichnet, dass** die äußere Beschichtung (4) auf demselben Kautschuktyp oder denselben Kautschuktypen basiert wie der elastomere Grundkörper.

11. Keilrippenriemen nach zumindest einem der Ansprüche 1 bis 9, **dadurch gekennzeichnet, dass** sich die äußere Beschichtung (4) farblich vom Grundkörper (2) unterscheidet.

12. Verfahren zur Herstellung eines Keilrippenriemens nach Anspruch 1, **gekennzeichnet durch** zumindest folgende Schritte:
a) Herstellung einer vulkanisierbaren Kautschukmischung für die äußere Beschichtung (4) der Rippen des Keilrippenriemens, die zumindest einen Kautschuk, Vulkanisationschemikalien, Fasern (5) und zumindest ein Pulver ausgewählt aus Fluorpolymerpulver (6) und Pulver aus einem Nichteisenmetall enthält,
b) Kalandrieren der Kautschukmischung für die äußere Beschichtung (4) zu einer Bahn (9) mit einer Schichtdicke von 0,15 bis 0,25 mm,
c) Aufbringen der Bahn (9) auf die im fertigen Riemen die Rippen bildende Seite einer Kautschukmischungsplatte für den Grundkörper (2) oder einen Riemenwickelrohling (8), der bereits zumindest die Kautschukmischungsplatte für die Decklage (1), die Zugträgerlage (3) und die Kautschukmischungsplatte für den Grundkörper (2) aufweist,
d) Vulkanisation des Riemenwickelrohlings (8) und
e) Schneiden des Keilrippenriemens.

13. Verfahren nach Anspruch 12, **dadurch gekennzeichnet, dass** die vulkanisierbare Kautschukmischung für die äußere Beschichtung (4) der Rippen des Keilrippenriemes ein Verarbeitungshilfsmittel zur Erhöhung der Rohfestigkeit enthält.

14. Verfahren nach Anspruch 12 oder 13, **dadurch gekennzeichnet, dass** die Bahn (9) für die äußere Beschichtung (4) durch einen Andrückvorgang an der Kautschukmischungsplatte für den Grundkörper (2) oder dem Riemenwickelrohling (8) fixiert wird.

15. Verfahren nach zumindest einem der Ansprüche 12 bis 14, **dadurch gekennzeichnet, dass** zumindest ein Teil der an der Oberfläche liegenden Fasern (5) in der äußeren Beschichtung (4) auf den Rippen nach der Vulkanisation durch einen Bürstvorgang aufgerichtet werden.

## Claims

1. V-ribbed belt with an elastomer outer layer (1), a tensionable layer (3) and an elastomeric base member (2), which has ribs, the ribs having an outer coating (4), which is firmly connected to the base member and contains polymer and fibres, **characterized in that** the outer coating (4) is an elastomer layer which contains at least fibres (5) in combination with fluoropolymer powder (6) and/or powder of a nonferrous metal, is based on crosslinked rubber and has a layer thickness of 0.15 to 0.25 mm.

2. V-ribbed belt according to Claim 1, **characterized in that** the layer thickness is 0.18 to 0.22 mm.

3. V-ribbed belt according to either of Claims 1 and 2, **characterized in that** the proportion of fibres in the outer coating (4) is 20 to 100 parts by weight per 100 parts by weight of rubber.

4. V-ribbed belt according to at least one of Claims 1 to 3, **characterized in that** the fibres (5) are polyimide fibres.

5. V-ribbed belt according to at least one of Claims 1 to 4, **characterized in that** the proportion of fluoropolymer powder (6) in the outer coating (4) is 10 to 100 parts by weight, preferably more than 50 parts by weight, per 100 parts by weight of rubber.

6. V-ribbed belt according to at least one of Claims 1 to 5, **characterized in that** the particles of the fluoropolymer powder (6) have an average grain diameter of 2 to 20 µm, a BET surface area of 5 to 25 m²/g and an apparent density of 100 to 400 g/L.

7. V-ribbed belt according to at least one of Claims 1 to 6, **characterized in that** the proportion of powder of a nonferrous metal in the outer coating (4) is 50 to 100 parts by weight per 100 parts by weight of rubber.

8. V-ribbed belt according to at least one of Claims 1 to 7, **characterized in that** the particles of the powder of a nonferrous metal are spherical, platelike or star-shaped and have an average particle diameter of 10 to 80 µm.

9. V-ribbed belt according to at least one of Claims 1 to 8, **characterized in that** the powder of a nonferrous metal is a copper powder.

10. V-ribbed belt according to at least one of Claims 1 to 9, **characterized in that** the outer coating (4) is based on the same type of rubber or the same types of rubber as the elastomeric base member.

11. V-ribbed belt according to at least one of Claims 1 to 9, **characterized in that** the outer coating (4) differs in colour from the base member (2).

12. Method for fabricating a V-ribbed belt according to Claim 1, **characterized by** at least the following steps:
a) preparation of a vulcanizable rubber mixture for the outer coating (4) of the ribs of the V-ribbed belt which contains at least one rubber, vulcanizing agents, fibres (5) and at least one powder selected from fluoropolymer powder (6) and powder of a nonferrous metal,
b) calendering of the rubber mixture for the outer coating (4) to form a web (9) with a layer thickness of 0.15 to 0.25 mm,
c) application of the web (9) to the side of a sheet of rubber mixture for the base member (2) that forms the ribs in the finished belt or to a wound belt blank (8), which already has at least the sheet of rubber mixture for the outer layer (1), the tensionable layer (3) and the sheet of rubber mixture for the base member (2),
d) vulcanization of the wound belt blank (8) and
e) cutting of the V-ribbed belt.

13. Method according to Claim 12, **characterized in that** the vulcanizable rubber mixture for the outer coating (4) of the ribs of the V-ribbed belt contains a processing aid to increase the green strength.

14. Method according to Claim 12 or 13, **characterized in that** the web (9) for the outer coating (4) is fixed on the sheet of rubber mixture for the base member (2) or the wound belt blank (8) by a pressure-exerting operation.

15. Method according to at least one of Claims 12 to 14, **characterized in that** at least some of the fibres (5) lying on the surface in the outer coating (4) on the ribs are made to stand up by a brushing operation after the vulcanization.

## Revendications

1. Courroie à nervures en V avec une couche de recouvrement élastomère (1), une couche de tirants (3) et un corps de base élastomère (2) qui présente des nervures, dans laquelle les nervures présentent un revêtement extérieur (4) fermement assemblé au corps de base et contenant du polymère et des fibres, **caractérisée en ce que** le revêtement extérieur (4) est une couche élastomère avec une épaisseur de couche de 0,15 à 0,25 mm à base de caoutchouc réticulé, contenant au moins des fibres (5) en combinaison avec une poudre de polymère fluoré (6) et/ou une poudre d'un métal non ferreux.

2. Courroie à nervures en V selon la revendication 1, **caractérisée en ce que** l'épaisseur de couche vaut 0,18 à 0,22 mm.

3. Courroie à nervures en V selon l'une quelconque des revendications 1 ou 2, **caractérisée en ce que** la fraction de fibres dans le revêtement extérieur (4) vaut 20 à 100 parties en poids par 100 parties en poids de caoutchouc.

4. Courroie à nervures en V selon au moins une des revendications 1 à 3, **caractérisée en ce que** les fibres (5) sont des fibres de polyimide.

5. Courroie à nervures en V selon au moins une des revendications 1 à 4, **caractérisée en ce que** la fraction de poudre de polymère fluoré (6) dans le revêtement extérieur (4) vaut 10 à 100 parties en poids, de préférence plus de 50 parties en poids, par 100 parties en poids de caoutchouc.

6. Courroie à nervures en V selon au moins une des revendications 1 à 5, **caractérisée en ce que** les particules de la poudre de polymère fluoré (6) présentent une granulométrie moyenne de 2 à 20 µm, une surface BET de 5 à 25 m²/g et une densité apparente de 100 à 400 g/l.

7. Courroie à nervures en V selon au moins une des revendications 1 à 6, **caractérisée en ce que** la fraction de poudre d'un métal non ferreux dans le revêtement extérieur (4) vaut 50 à 100 parties en poids par 100 parties en poids de caoutchouc.

8. Courroie à nervures en V selon au moins une des revendications 1 à 7, **caractérisée en ce que** les particules de la poudre d'un métal non ferreux ont une forme de bille, de plaquette ou d'étoile et présentent un diamètre de particule moyen de 10 à 80 *µ*m.

9. Courroie à nervures en V selon au moins une des revendications 1 à 8, **caractérisée en ce que** la poudre d'un métal non ferreux est une poudre de cuivre.

10. Courroie à nervures en V selon au moins une des revendications 1 à 9, **caractérisée en ce que** le revêtement extérieur (4) est basé sur le même type de caoutchouc ou les mêmes types de caoutchouc que le corps de base élastomère.

11. Courroie à nervures en V selon au moins une des revendications 1 à 9, **caractérisée en ce que** le revêtement extérieur (4) se distingue du corps de base (2) par la couleur.

12. Procédé de fabrication d'une courroie à nervures en V selon la revendication 1, **caractérisé par** au moins les étapes suivantes :
a) préparation d'un mélange de caoutchouc vulcanisable pour le revêtement extérieur (4) des nervures de la courroie à nervures en V, qui contient au moins un caoutchouc, des produits chimiques de vulcanisation, des fibres (5) et au moins une poudre sélectionnée parmi une poudre de polymère fluoré (6) et une poudre d'un métal non ferreux,
b) calandrage du mélange de caoutchouc pour le revêtement extérieur (4) en une bande (9) ayant une épaisseur de couche de 0,15 à 0,25 mm,
c) application de la bande (9) sur la face d'une plaque de mélange de caoutchouc formant les nervures dans la courroie terminée, pour le corps de base (2) ou une ébauche de boucle de courroie (8), qui comprend déjà au moins la plaque de mélange de caoutchouc pour la couche de recouvrement (1), la couche de tirants (3) et la plaque de mélange de caoutchouc pour le corps de base (2),
d) vulcanisation de l'ébauche de boucle de courroie (8), et
e) coupe de la courroie à nervures.

13. Procédé selon la revendication 12, **caractérisé en ce que** le mélange de caoutchouc vulcanisable pour le revêtement extérieur (4) des nervures de la courroie à nervures en V contient un adjuvant de traitement pour augmenter la résistance brute.

14. Procédé selon la revendication 12 ou 13, **caractérisé en ce que** la bande (9) pour le revêtement extérieur (4) est fixée par une opération de pressage sur la plaque de mélange de caoutchouc pour le corps de base (2) ou sur l'ébauche de boucle de courroie (8).

15. Procédé selon au moins une des revendications 12 à 14, **caractérisé en ce qu'**au moins une partie des fibres (5) situées à la surface dans le revêtement extérieur (4) sur les nervures sont orientées par une opération de brossage après la vulcanisation.
